# EUROPEAN PATENT APPLICATION

(11) **EP 2 575 225 A1**
(43) Date of publication of application: **03.04.2013**
(21) Application number: 11425242.2
(22) Date of filing: 27.09.2011
(51) Int. Cl.: H02G 11/00, F16G 13/16

(54) **Energy chain duct**

(71) Applicant: Findalto S.r.l., 20052 Monza (MB) (IT)
(72) Inventor: Mauri, Giovanni, 20052 Monza (MB) (IT)
(74) Representative: Riccardi, Sergio

(57) **Abstract**

An energy chain duct (100) constituted by a set of lateral sidewalls (10), each formed with brackets (14) at each end (12) thereof, each sidewall end being laid on a cross member (20) having reference slots (22) and fixing groove (24) holding fixing means (30) an engaging member (50) having a horizontal base portion (52) provided with protrusions (54) fitting said reference slots (22) of said cross member and an aperture (56) receiving said fixing means (30); a vertical shoulder portion (51) intended for supporting one or more crossbars (53) engaging brackets (14) of adjacent sidewall ends (12) in slideable fashion.

## Description

The present invention relates to an energy chain duct for receiving and guiding an energy chain.

Most guide channels or ducts used for guiding energy chains are currently provided in the form of assembly kit comprising sidewalls defining the channel, a set of base parts supporting the sidewalls and fastening devices, such as squares and screws or bolts, to fasten sidewalls on the corresponding base parts. The user is therefore allowed to mount each guide channel according to the specific layout of the plant or machine, while defining length and inside width required by the energy chains adopted for the same plant or machine.

However, the actual design of the assembly kits for the energy chain ducts generally requires a considerable amount of time for the installation, particularly due to the large number of screws or bolts for fastening each square to each pair of adjacent sidewalls and each base part.

Main object of the present invention is therefore to provide an energy chain duct which can be easily and quickly assembled.

Further object of the present invention is then to provide an energy chain duct which can be adjusted in terms of inside width so as to fit it to energy chains used in a specific plant or machine.

In order to solve the abovementioned technical issues the present invention provides sidewalls having at each end thereof one or more brackets, preferably integrally formed with the sidewalls; such brackets are arranged in respect of each other so as to define across two adjacent sidewall ends a passage parallel to sidewall external surface. Each pair of adjacent sidewall ends, on both right and left side of the chain duct, are laid onto a cross member, formed preferably as an metal extruded piece provided with longitudinal slots and groove. A fastening device is suitably designed for longitudinally engaging passage through the brackets and transversely engaging cross member slots. Therefore assembling of the duct, that is fastening of the sidewalls on the corresponding cross members, can be assured by simultaneous action of the fastening device against brackets, so as to stop any sidewall transverse shift, and against cross member slots, so as to stop any sidewall longitudinal shift; finally by means of a single bolt the joined sidewall ends are prevented from any vertical shift in respect of the cross members. The fastening device, as best disclosed in the following, achieves the above results by crossbar elements, which fits bracket passage in a bayonet fashion, and one or more protrusions, fitting cross member slots, integrally formed on a right-angled support.

These and other features and characteristics of the energy chain duct according to the present invention will be clearly understood from the detailed description of the preferred embodiments taken in conjunction with the annexed drawings, in which:
fig. 1 is a perspective view of two adjacent sidewalls on one side of the energy chain duct according to a preferred embodiment of the present invention once assembled,
figs. 2 to 5 are perspective views of the embodiment in fig. 1 during subsequent steps of the assembly process,
fig. 6 is a perspective view of the assembled energy chain duct according to another embodiment of the present invention, and
fig. 7 is a perspective view of an enlarged detail of the embodiment in fig. 6.

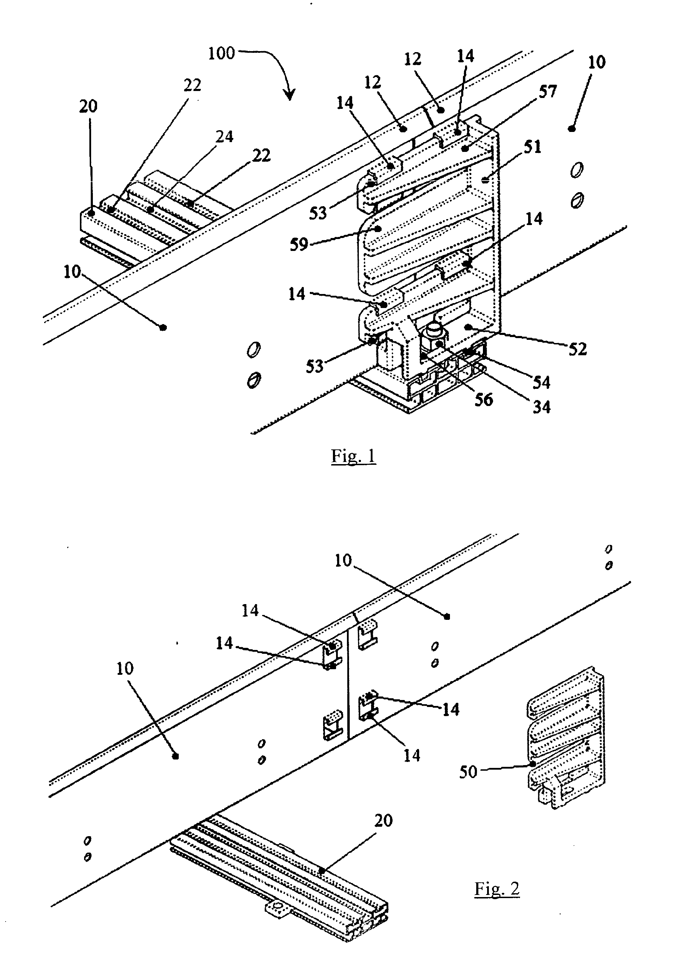

With reference now to fig. 1, a pair of adjacent sidewalls 10 forming one side of the duct 100 is shown in its assembled condition in which said sidewalls 10 are juxtaposed at their opposite ends 12. Each sidewall 10 has two vertically aligned pairs of brackets 14, an upper bracket pair and a lower bracket pair, each bracket pair having a first downwardly directed bracket and a second upwardly directed bracket facing to each other. Therefore, in juxtaposed condition of sidewalls, the upper bracket pairs and the lower bracket pairs result horizontally aligned to each other, thus defining two passages dimensioned for receiving corresponding crossbars 53 of an engaging member 50. The engaging member 50 is formed as a right-angled support comprising a horizontal base portion 52 and a vertical shoulder portion 51: the crossbars 53 are integrally formed at one end thereof with the shoulder portion 51 and stiffened by ribs 57. The other end of the crossbar 53 is provided with a detent 55 downwardly oriented so as to engage the upwardly directed bracket 14 in each pair: therefore the disclosed coupling of adjacent sidewalls 10 grants longitudinal alignment and prevents the coupled sidewalls from longitudinally moving away from each other, while being stopped by shoulder 51 in one direction and by detent 55 in the opposite direction. A restraining plate 59 is similarly arranged in respect of the shoulder 51 and serves to avoid bulging of the sidewalls 10 in the space between the crossbars 53. Once coupled, the adjacent sidewalls 10 and the engaging member 50 are laid on a cross member 20: a pair of reference slots 22 is formed along longitudinal axis of the cross member 20; a corresponding pair of protrusions 54 project from a lower surface of the base portion 52 of the engaging member 50 and fit the above reference slots 22. Once fitted, the protrusions 54 allow the coupled sidewalls 10 to be slideably moved along longitudinal axis of the cross member 20 thus assuring adjustment of the inside width of the duct 100, that is distance between sidewalls 10 shown in fig. 1 and sidewalls (not shown) on the opposite side of the cross member 20. Once defined the above width, the coupled sidewalls 10 can be held in place by fastening the base portion 52 to the cross member 20: for such purpose a fixing groove 24 is formed between the reference slots 22, in particular having a T shaped section in which head of a bolt 32 can be inserted and retained. The shank of the bolt 32 is passed through said groove 24 whilst the bolt thread is received within an aperture 56, in the form of a slit or through hole, of the base portion 52. A nut 34 and washer are finally threaded on said bolt thus achieving the desired tightening effect. Therefore the coupled sidewalls 10 are prevented, due to the bolt action, from vertical shifting and, due to protrusions 54 fitting reference slots 22, from transversal shifting in respect of the cross member 20.

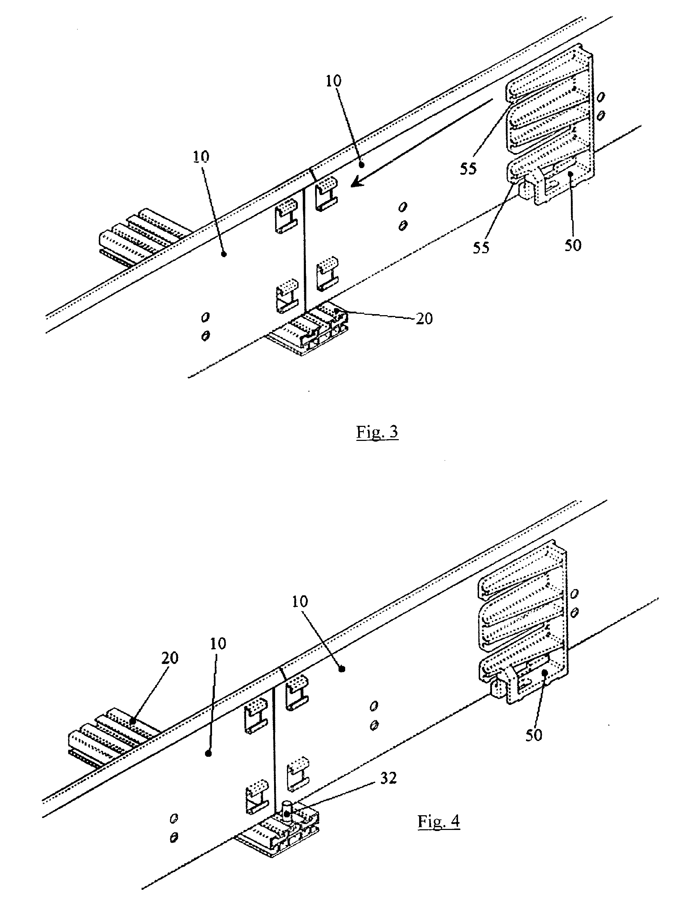

Turning now to figs. 2 to 5, subsequent steps of the assembly process of the energy chain duct 100 are shown. Starting from fig. 2, all the assembly parts are separate from one another; two adjacent sidewalls 10 are juxtaposed at their opposite ends 12 and laid on the cross member 20. The bolt 32 is inserted in the central groove 24 and moved approximatively in the position corresponding to the desired width of the energy chain duct 100. The engaging member 20 is slid on the external surface of one sidewall 10 till its crossbars 53 are fully received within respective passages defined by the sidewall brackets. It is to be envisioned that crossbars and spacing between opposite brackets are dimensioned for a clearance fit resulting, during assembly, in a limited vertical adjustment of the engaging member 50 in respect of the cross member 20. Such vertical adjustment is required for avoiding protrusions 54 of the base portion 52 to abut against external edge of the cross member 20 which would hinder the assembly process. Similarly the base portion 52 is provided with an aperture 56 being opened at one edge of the same base 52 for allowing sliding of the engaging member 50. After full insertion of the crossbars within the respective sidewall brackets, the engaging member 50, as just disclosed, can be lowered so as to fit the protrusions 54 into the reference slots and engage the detents 55 with the corresponding brackets 14. The nut 34 can now be threaded on the bolt 32 thus securing the sidewalls 10 on the cross member 20.

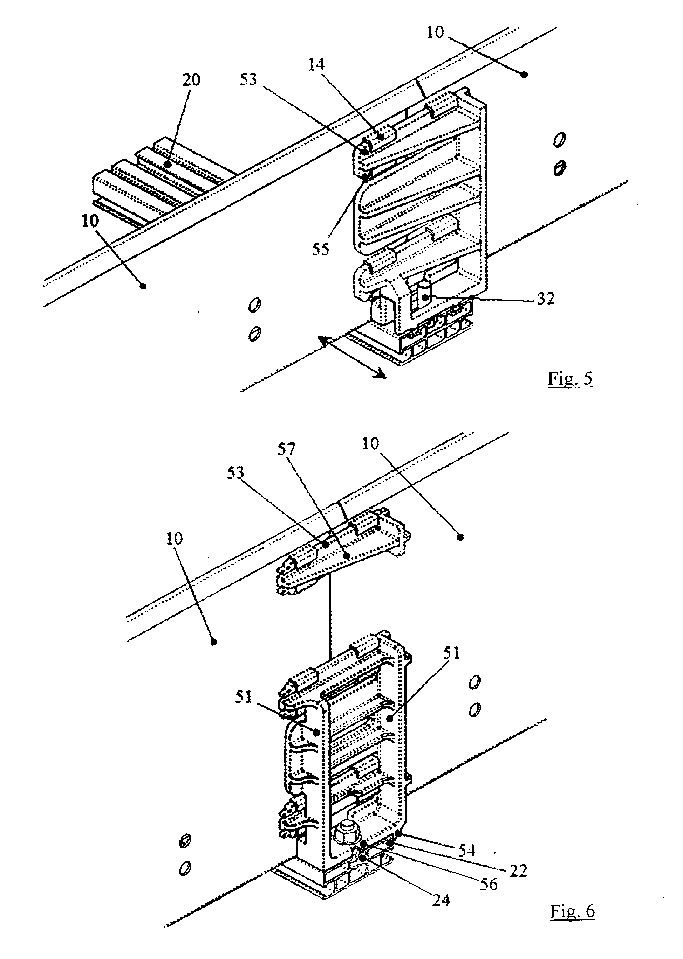

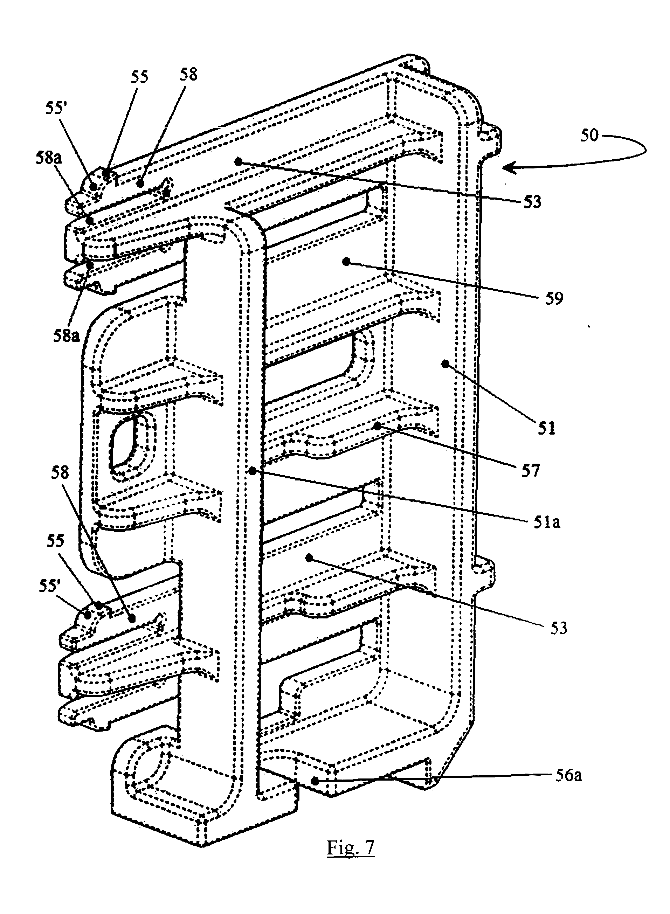

With reference to figs. 6 and 7, an alternative embodiment of the energy chain duct 100 according to the present invention is shown having an engaging member 50 provided with an additional shoulder portions 51a in respect of the preferred embodiment previously disclosed. Said additional shoulder 51a is integrally formed with the base portion 52, the restraining plate 59 and each crossbar 53 close to free end thereof, so as to achieve an improved stiffness for the coupling system. Furthermore, a pair of notches 58a is formed at free end of each crossbar 53 along crossbar longitudinal axis so as to define a corresponding pair of lateral cantilever beams 58. In particular each cantilever beam 58 comprises the above mentioned detent 55 which protrudes from beam edge and is filleted thereto with a sloping surface 55'. As known in the art the elasticity associated with a cantilever beam, along with the material the beam is made of, can be profitably used in design of particular engagement systems, such as snap-fit engagement. Accordingly the bracket pair, constituting the other part of the snap-fit engagement, is no more needed to be dimensioned for a clearance fit, which allows vertical adjustment of the crossbar within the pair as it occurs in the previously described embodiment, but rather for an interference fit. The lateral cantilever beams at the crossbar free ends are in a first straight condition; once approximated to the bracket pair the sloping surfaces 55'abut against the brackets 14 which naturally bends the cantilever beams 58 and allow them to slide within the pair. When the detents 55 exit the bracket pair, the beams are allowed to return in their initial straight condition thus forcing the detents 55 against the bracket pair. In case of removal or replacement, the engaging member 50 can be disengaged from the sidewalls 10 by pressing the detents 55 toward each other and pulling the engaging member 50 out of the bracket pairs.

Advantageously, the aperture 56a is no more longitudinally but transversely formed in respect of the base 52, that is the aperture 56a is aligned to the fixing groove 24 of the cross member. Moreover the alternative embodiment has a single protrusion 54 flush with one edge of the base portion 52 so as to engage the external edge of the cross member 20; according with such arrangement there is no more need of any reference slot 22 for the cross member 20. Finally, a stand-alone crossbar 53a engaging the upper pair of brackets 14 can be adopted in case of particularly high sidewalls 10.

From the above description it is clear to those skilled in the art that the disclosed preferred embodiment may be varied and changed in order to accomplish specific objects depending on actual application of the energy chain duct; for example a third embodiment of the invention may be obtained from combination of the features of the preferred embodiment and alternative embodiment, such as adoption of stand-alone crossbars, different positioning of the reference protrusion, or even different tolerances allowing particular step sequence in the assembly process. All these modifications and changes do not depart from the scope of the present invention as claimed below.

## Claims

1. An energy chain duct (100) including
longitudinally extending lateral sidewalls (10), each sidewall provided with brackets (14) at each end (12) thereof, each sidewall end being laid on
a cross member (20) having at least one reference edge (22) and fixing groove (24) holding
fixing means (30)
an engaging member (50) **characterized by** having a horizontal base portion (52) and a vertical shoulder portion (51), said base portion being provided with at least one protrusion (54) fitting said at least one reference edge (22) of said cross member and aperture (56) receiving said fixing means (30), said shoulder portion (51) supporting at least one crossbar (53) slideably engaging brackets (14) of adjacent sidewall ends (12).

2. The energy chain duct according to claim 1, wherein said at least one crossbar (53) is provided for a snap-fit engagement (58; 55; 55'; 14), preferably a cantilever beam snap-fit engagement, with said brackets (14).

3. The energy chain duct according to one or more preceding claims, wherein said reference edge (22) is the edge of a longitudinal slot of said cross member (20).

4. The energy chain duct according to one or more preceding claims, wherein each sidewall comprises a first upwardly directed bracket (14) and a second downwardly directed bracket (14), said first and second brackets (14) limiting vertical adjustment of the respective engaging crossbar (53).

5. The energy chain duct according to one or more preceding claims, wherein said fixing means (30) are bolt (32) and nut (34), said fixing groove (24) is a T shaped groove receiving and holding the bolt head, the bolt being passed through said aperture (56) and tightened by said nut (34).

6. The energy chain duct according to one or more preceding claims, wherein said reference edge (22) extends along the cross member (20) for adjustment of the spacing between said lateral sidewalls (10).

7. The energy chain duct according to one or more preceding claims, wherein said at least one crossbar (53) is further provided with a detent (55) retained by said bracket (14) and, preferably, formed at free end of said crossbar (53).

8. The energy chain duct according to one or more preceding claims, wherein said at least one crossbar (53) is stiffened by a rib (57) connected to said shoulder portion (51).

9. The energy chain duct according to one or more preceding claims, wherein said aperture (56) is a through-hole.

10. The energy chain duct according to one or more preceding claims, wherein said aperture (56) is a slit opened at one edge of the base portion (52).

11. The energy chain duct according to one or more preceding claims, wherein said cross member (20) is an extruded aluminium bar.

12. The energy chain duct according to one or more preceding claims, wherein said engaging member (50) further supports, on its shoulder portion (51), a restraining plate (59) for sidewall ends (12).

13. The energy chain duct according to one or more preceding claims, wherein an additional stand-alone crossbar (53) is provided for engaging additional brackets (14) formed in the sidewalls (10).

14. The energy chain duct according to one or more preceding claims, wherein an additional shoulder (51 a) is provided for supporting said crossbars (53).
